# EUROPÄISCHE PATENTSCHRIFT

(11) **EP 2 353 772 B1**
(45) Veröffentlichungstag und Bekanntmachung des Hinweises auf die Patenterteilung: **06.03.2013**
(21) Anmeldenummer: 10008431.8
(22) Anmeldetag: 12.08.2010
(51) Int. Cl.: B23P 9/04

(54) **Verfahren und Vorrichtung zur Oberflächenverfestigung von Bliskschaufeln**
Method and device for fixing blisk blades to a surface
Procédé et dispositif destinés à la fixation de surfaces de pales de blisk

(30) Priorität: 27.01.2010 DE 102010001287
(43) Veröffentlichungstag der Anmeldung: 10.08.2011
(73) Patentinhaber: Rolls-Royce Deutschland Ltd & Co KG, 15827 Blankenfelde-Mahlow (DE)
(72) Erfinder: Hennig, Wolfgang, Durham DH 1 5 SE (GB); Feldmann, Goetz G., DR., 61440 Oberursel (DE)
(74) Vertreter: Weber, Joachim

(56) Entgegenhaltungen:
- EP-A1- 2 093 021
- WO-A2-2008/063697
- JP-A- 2006 058 145
- US-A- 5 778 713
- US-A1- 2009 235 526

## Beschreibung

Die Erfindung betrifft ein Verfahren zur Oberflächenverfestigung von Bliskschaufeln und eine Vorrichtung zur Durchführung des Verfahrens.

Gasturbinenrotoren und insbesondere die Rotoren der Kompressoren von Gasturbinentriebwerken werden unter dem Aspekt der Zuverlässigkeit, Gewichtseinsparung, Leistungssteigerung und Lebensdauer mit einer am Außenumfang einer Rotorscheibe integral ausgebildeten Beschaufelung ausgeführt. Derartige Bauteile werden als Blisks bezeichnet, wobei der Begriff Blisk eine Kurzform des englischsprachigen Ausdrucks "blade integrated disk" ist. Die Herstellung von Blisks erfolgt bekanntermaßen durch Verschweißen, insbesondere Reibschweißen, separat gefertigter Schaufeln mit der Umfangsringfläche der vorzugsweise geschmiedeten Rotorscheibe oder durch einen von der Außenringfläche der Scheibe ausgehenden Materialabtrag mittels spangebender oder elektro-chemischer Verfahren. Nach dem Ausformen und einer Feinbearbeitung der Bliskschaufeln und nach einer Wärmebehandlung der gesamten Blisk bzw. einer aus mehreren miteinander verbundenen Blisks bestehenden Blisktrommel erfolgt durch Krafteinwirkung auf die Oberflächen der Bliskschaufeln eine plastische Verformung und damit eine Erzeugung von Druckeigenspannungen in der Schaufeloberfläche. Aufgrund der dadurch bewirkten Oberflächenverfestigung werden der Widerstand gegen schwingungsinduzierte Rissbildung und Rissausbreitung sowie die Verschleiß- und Korrosionsbeständigkeit und letztlich die Lebensdauer der Blisk bzw. Blisktrommel erhöht. Die Oberflächenbehandlung von Bliskschaufeln erfolgt bekanntermaßen durch eine Kugelstrahlverfestigung, bei der ein sphärisches Strahlmittel mit Hilfe von Druckluft mit hoher Geschwindigkeit gegen die Schaufeloberfläche geschleudert wird. Die hierzu eingesetzten Vorrichtungen sind jedoch insofern nachteilig, als mit dem aus einer Düsenöffnung austretenden Kugelstrahl, der entlang einer Vielzahl von Bahnen über die Schaufelfläche verfahrbar ist und dessen Austrittsgeschwindigkeit und - volumen schwanken kann, eine auf der gesamten Oberfläche gleichmäßige Verfestigung nicht gewährleistet ist. Zudem ist mit der beim Kugelstrahlen auftretenden plastischen Verformung der Schaufeloberfläche eine erhebliche Veränderung der Oberflächentopographie, das heißt, eine Erhöhung der Oberflächenrauheit, verbunden. Die erhöhte Oberflächenrauheit führt zu negativen aerodynamischen Effekten. Zwar kann die Rauheit durch einen zusätzlichen Polierschritt verringert werden, jedoch ist das Polieren aufgrund der komplexen Geometrie der Blisk nur mit erheblichem Aufwand realisierbar. Zudem wird dabei die Wirkung der vorhergehenden Kugelstrahlverfestigung abgeschwächt, da ein Teil der zuvor verfestigten Oberflächenschicht wieder abgetragen wird.

Die EP 2 093 021 A1 beschreibt die Kugelstrahlverfestigung von Bliskschaufeln, wobei mittels Druckluft oder Wasser Kugeln durch jeweils eine auf jeder Schaufelseite angeordnete Düse gleichzeitig auf beide Schaufelseiten geschleudert werden.

Die US 5 778 713 A beschreibt die Strahl-Verfestigung einer Oberfläche eines Werkstücks mittels einer singulären Düse, durch welche ein Wasserstrahl mit sehr hohem Druck und sehr hoher Geschwindigkeit aufgebracht wird.

Der Erfindung liegt die Aufgabe zugrunde, ein Verfahren und eine Vorrichtung zur Oberflächenverfestigung von Bliskschaufeln anzugeben, die eine über die Schaufeloberfläche gleichmäßig verteilte Einbringung von Druckeigenspannungen und somit eine gleichmäßige Verfestigung gewährleistet und eine durch die Verfestigung bedingte Erhöhung der Oberflächenrauheit und die daraus resultierenden nachteiligen Wirkungen vermeidet.

Erfindungsgemäß wird die Aufgabe mit einem Verfahren gemäß den Merkmalen des Anspruchs 1 und einer gemäß den Merkmalen des Patentanspruchs 2 ausgebildeten Vorrichtung gelöst. Vorteilhafte Weiterbildungen der Erfindung sind Gegenstand der Unteransprüche.

Der Grundgedanke der Erfindung besteht darin, dass die zu behandelnde Bliskschaufel mindestens im Bearbeitungsbereich oder vollständig in ein Wasserbad eingebracht wird und in das Wasserbad eine Vielzahl von beidseitig und im Wesentlichen senkrecht und jeweils gegenüberliegend auf die beiden Schaufelflächen gerichteten Hochdruck-Wasserstrahlen injiziert werden. Am Umfang der Hochdruck-Wasserstrahlen werden in dem Wasserbad Kavitationsblasen generiert, die nahe der Schaufeloberfläche implodieren und dabei einen Druckimpuls auf die Schaufeloberfläche ausüben, der im Unterschied zu der Kugelschlagwirkung beim Kugelstrahlverfestigen eine plastisch eingeformte Vertiefung mit abgerundetem, das heißt ohne eine scharfe umlaufende Kante ausgebildetem Rand erzeugt. Gegenüber dem Kugelstrahlen wird bei deutlicher verringerter Oberflächenrauheit eine insbesondere auch im filigranen Kantenbereich der Bliskschaufeln schonende Oberflächenverfestigung erreicht. Es entfallen zusätzliche Polierschritte und die Oberflächenfestigkeit wird dahingehend verbessert, dass die verfestigte Oberfläche nicht durch Abtrag negativ in ihren Eigenschaften verändert wird. Zudem ist auch die Bearbeitung kleiner Kehlradien gewährleistet.

Eine erfindungsgemäße Vorrichtung zur Durchführung des Verfahrens umfasst einen das Wasserbad ausbildenden Behälter zur Aufnahme einer Blisk oder Blisktrommel sowie eine aus im Abstand und parallel angeordneten, an eine Hochdruck-Wasserleitung angeschlossenen Wasserstrahlrohren gebildete Bestrahlungseinheit mit in Längserstreckung der Wasserstrahlrohre und in gleichmäßigem Abstand ausgebildeten Düsenöffnungen zur Erzeugung von das Wasserbad in Richtung der Schaufeloberfläche durchdringenden Hochdruck-Wasserstrahlen. Die Düsenöffnungen der gegenüberliegenden Wasserstrahlrohre sind jeweils aufeinander zu gerichtet und unmittelbar gegenüberliegend angeordnet.

Der Hochdruck-Wasserstrahl tritt im Wesentlichen senkrecht aus den Düsenöffnungen in Richtung der Schaufelflächen aus. Es ist jedoch eine davon abweichende Austrittsrichtung denkbar. Die Bestrahlungseinheit ist mit einer Manipuliervorrichtung zur Bewegung der Wasserstrahlrohre in beidseitig gleichmäßigem und der Schaufelkrümmung folgendem Abstand von der Schaufeloberfläche verbunden.

In Ausgestaltung der Erfindung umfasst die Bestrahlungseinheit auf beiden Seiten mindesten ein Wasserstrahlrohr mit jeweils einer Reihe Düsenöffnungen. Die beiderseitigen Wasserstrahlrohre können aber auch einen Rechteckquerschnitt haben und jeweils mindestens eine Reihe Düsenöffnungen aufweisen. Die Länge der Wasserstrahlrohre oder einer Reihe von Düsenöffnungen entspricht einem Teil oder mindestens der gesamten Länge der zu behandelnden Bliskschaufel Die Bestrahlungseinheit ist mit Hilfe der Manipuliervorrichtung in X-, Y- und Z-Richtung linear bewegbar sowie um eine horizontale und eine vertikale Achse schwenkbar.

Mit der so ausgebildeten Vorrichtung können die Bliskschaufeln vollständig und gleichmäßig sowie mit identischen Bearbeitungsparametern verfestigt werden.

Ein Ausführungsbeispiel der Erfindung wird anhand der Zeichnung, in der
- Fig. 1: eine Vorderansicht einer Vorrichtung zur Oberflächenverfestigung einer von Wasser umgebenen Schaufel einer Blisk;
- Fig. 2: eine Seitenansicht der Vorrichtung nach Fig. 1, jedoch ohne den die Blisk aufnehmenden Wasserbehälter; und
- Fig. 3: eine vergrößerte Darstellung eines auf die im Wasser angeordnete Schaufeloberfläche gerichteten Hochdruck-Wasserstrahls
zeigt, näher erläutert.

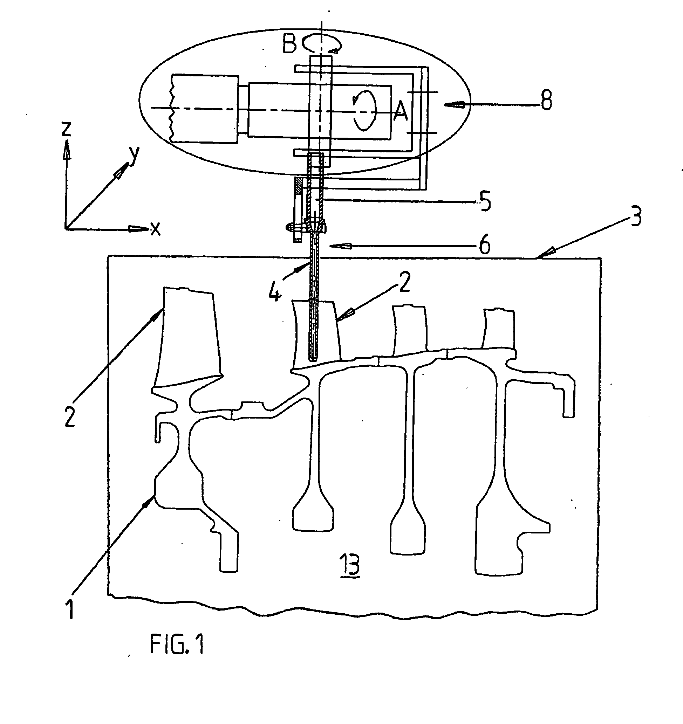

In Fig. 1 ist ein Halbschnitt einer Blisktrommel 1 mit Bliskschaufeln 2 dargestellt. Die Blisktrommel 1 befindet sich in einem mit Wasser gefüllten Behälter 3, so dass die Bliskschaufeln 2 während der Oberflächenverfestigung ständig von einem Wasserbad 13 umgeben sind. Die Vorrichtung umfasst des Weiteren zwei parallel und im Abstand zueinander angeordnete, am distalen Ende geschlossene Wasserstrahlrohre 4, deren gegenüberliegendes offenes Ende jeweils an eine Hochdruck-Wasserleitung 5 angeschlossen ist. Die beiden - eine Bestrahlungseinheit 6 bildenden - Wasserstrahlrohre 4 sind über eine Haltevorrichtung 7 fest mit einer Manipuliervorrichtung 8 verbunden, die eine Bewegung der Bestrahlungseinheit 6 in X-, Y- und Z-Richtung sowie deren Schwenkbewegung um eine vertikale und eine horizontale Achse gemäß den Pfeilen A und B erlaubt. An den einander gegenüberliegenden Seiten der Wasserstrahlrohre 4 sind jeweils in einer Reihe und in gleichmäßigem Abstand Düsenöffnungen 9 zur Erzeugung eines mit hoher Geschwindigkeit austretenden Hochdruck-Wasserstrahls 10 ausgebildet. Die Düsenöffnungen 9 in den beiden Wasserstrahlrohren 4 sind so angeordnet, dass die aus diesen austretenden Hochdruck-Wasserstrahlen 10 genau aufeinander zu gerichtet sind, um auf der Druckseite und der Saugseite der Bliskschaufel an genau gegenüberliegenden Bereichen eine Krafteinwirkung auf die Schaufeloberfläche zu bewirken. Die Länge der Wasserstrahlrohre 4 bzw. der von diesen gebildeten Bestrahlungseinheit 6 entspricht mindestens der maximalen Höhe der Bliskschaufeln 2, deren Oberfläche verfestigt werden soll, so dass mit einer oder mehreren Bewegungsbahnen der Bestrahlungseinheit die gesamte Schaufelfläche erfasst und gleichmäßig bestrahlt werden kann.

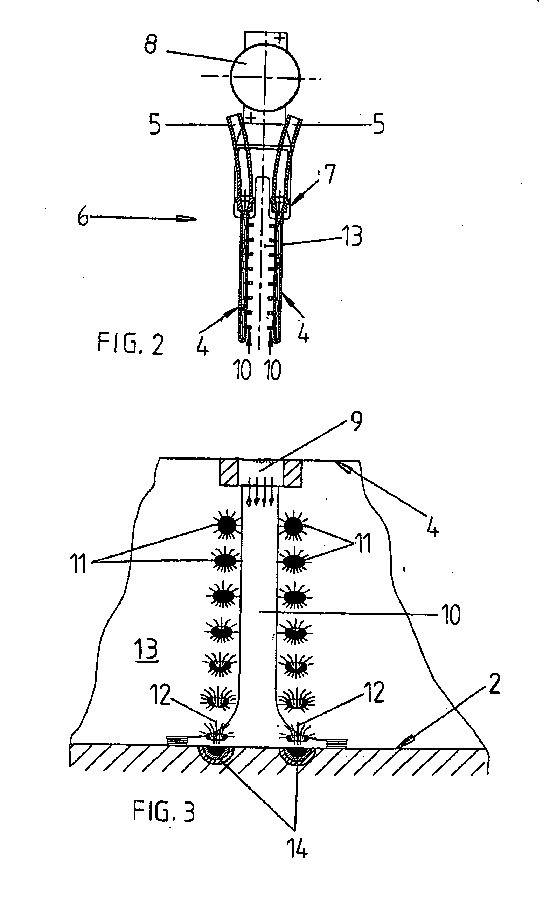

Während der Verfestigungsbehandlung befindet sich die betreffende Bliskschaufel 2 in dem Wasserbad 13 und zwischen den beiden Wasserstrahlrohren 4, denen über die Hochdruck-Wasserleitungen 5 unter hohem Druck von beispielsweise 350 bar stehendes Wasser zur Erzeugung der auf die Druckseite und die Saugseite der Bliskschaufel 2 gerichteten, aus den Düsenöffnungen 9 austretenden Hochdruck-Wasserstrahlen 10 zugeführt wird. Der Durchmesser der Düsenöffnungen 9 bzw. der Hochdruck-Wasserstrahlen 10 beträgt gemäß dem vorliegenden Ausführungsbeispiel 1 mm. Aufgrund der mit hoher Geschwindigkeit (v₁) in das ruhende Wasserbad 13 (Geschwindigkeit v₀) im Behälter 3 eintretenden, sich in Richtung der Saug- und Druckseite der Bliskschaufel 2 bewegenden Hochdruck-Wasserstrahlen 10 bilden sich - wie in Fig. 3 schematisch dargestellt - infolge des dabei unter den Verdampfungsdruck des Wassers sinkenden statischen Drucks Kavitationsblasen 11 (Dampf-oder Gasblasen, Unterdruckblasen) aus, die im Verlauf des Hochdruck-Wasserstrahls 10 mit sich änderndem Druck allmählich zusammenfallen und an oder nahe der Oberfläche der Bliskschaufel 2 implodieren und dabei einen auf die Schaufelfläche wirkenden Mikrostrahl 12 oder Druckimpuls erzeugen. Während der Bearbeitung ist die Bliskschaufel 2 mittig zwischen den beiden Wasserstrahlrohren 4 angeordnet. Die Bestrahlungseinheit 6 wird mit Hilfe der Manipuliervorrichtung 8 mindestens einmal zwischen der Vorderkante und der Hinterkante der Bliskschaufel 2 bewegt und folgt durch Verschwenken der Bestrahlungseinheit 6 mittels der Manipuliervorrichtung 8 dem gekrümmten Verlauf der Schaufelflächen. Während des Verfahrens der Bestrahlungseinheit 6 trifft eine Vielzahl von durch implodierende Kavitationsblasen 11 erzeugten Mikrostrahlen 12 gleichzeitig und gegenüberliegend auf die Druck- und die Saugseite der Bliskschaufel 2 auf, die dort winzige, plastisch eingeformte Vertiefungen 14- jedoch ohne umlaufende scharfe Kanten bzw. mit zur Schaufeloberfläche hin abgerundeten oder unscharfen Kanten - zur Oberflächenverfestigung erzeugen. Die plastische Verformung erfolgt in einem Arbeitsschritt über die gesamte Schaufelhöhe sehr gleichmäßig und dabei sehr schonend (ohne Ausbildung scharfer Kanten am Rand der Vertiefung und somit ohne wesentliche Erhöhung der Oberflächenrauheit), so dass ein nachfolgender Polierschritt und ein damit verbundener Materialabtrag entfallen kann.

Die Erfindung ist nicht auf das zuvor beschriebene Ausführungsbeispiel beschränkt. Beispielsweise können die Wasserstrahlrohre 4 auch einen rechteckigen Querschnitt haben und zwei oder mehr nebeneinander liegende Reihen von Düsenöffnungen 9 aufweisen.

### Bezugszeichenliste

- 1: Blisktrommel
- 2: Bliskschaufel
- 3: Behälter
- 4: Wasserstrahlrohre
- 5: Hochdruck-Wasserleitung
- 6: Bestrahlungseinheit
- 7: Haltevorrichtung
- 8: Manipuliervorrichtung
- 9: Düsenöffnung
- 10: Hochdruck-Wasserstrahl
- 11: Kavitationsblasen
- 12: Mikrostrahl (Druckimpuls)
- 13: Wasserbad
- 14: plastisch eingeformte Vertiefung

## Patentansprüche

1. Verfahren zur Oberflächenverfestigung von Bliskschaufeln mittels einer Vorrichtung nach Anspruch 2, **dadurch gekennzeichnet, dass** die zu behandelnde Bliskschaufel vollständig oder mindestens im Bearbeitungsbereich in ein Wasserbad (13) eingebunden wird und in das Wasserbad eine Vielzahl von beidseitig und im Wesentlichen senkrecht und/oder schräg und jeweils gegenüberliegend auf die beiden Schaufelflächen gerichteten Hochdruck-Wasserstrahlen (10) zur Ausbildung von am Umfang der Hochdruck-Wasserstrahlen in dem Wasserbad generierten und nahe der Schaufeloberfläche implodierenden Kavitationsblasen (11) injiziert werden, wobei bei der Implosion erzeugte Mikrostrahlen (12) auf die Schaufeloberflächen wirken und in dieser nicht randscharf plastisch eingeformte Vertiefungen (14) erzeugen.

2. Vorrichtung zur Durchführung des Verfahrens zur Oberflächenverfestigung von Bliskschaufeln nach Anspruch 1, mit einem das Wasserbad (13) ausbildenden Behälter (3) zur Aufnahme einer Blisk oder Blisktrommel (1) sowie einer aus im Abstand und parallel angeordneten, an eine HochdruckWasserleitung (5) angeschlossenen Wasserstrahlrohren (4) gebildeten Bestrahlungseinheit (6) mit in Längserstreckung der Wasserstrahlrohre (4) und in gleichmäßigem Abstand ausgebildeten Düsenöffnungen (9) zur Erzeugung von das Wasserbad (13) in Richtung der Schaufeloberfläche durchdringenden Hochdruck-Wasserstrahlen (10), wobei die Düsenöffnungen (9) der gegenüberliegenden Wasserstrahlrohre (4) jeweils aufeinander zu gerichtet und unmittelbar gegenüberliegend angeordnet sind und die Bestrahlungseinheit (6) mit einer Manipuliervorrichtung (8) zur Bewegung der Wasserstrahlrohre (4) in beidseitig gleichmäßigem Abstand von der Schaufeloberfläche verbunden ist.

3. Vorrichtung nach Anspruch 2, **dadurch gekennzeichnet, dass** die Bestrahlungseinheit (6) auf beiden Seiten mindestens ein Wasserstrahlrohr (4) mit jeweils einer Reihe Düsenöffnungen (9) umfasst.

4. Vorrichtung nach Anspruch 2, **dadurch gekennzeichnet, dass** die beiderseitigen Wasserstrahlrohre (4) einen Rechteckquerschnitt haben und jeweils mindestens eine Reihe Düsenöffnungen (9) aufweisen.

5. Vorrichtung nach Anspruch 2, **dadurch gekennzeichnet, dass** die Länge der Wasserstrahlrohre (4) oder einer Reihe von Düsenöffnungen (9) einen Tell oder mindestens die ganze Länge der zu behandelnden Bliskschaufel (2) erfasst.

6. Vorrichtung nach Anspruch 2, **dadurch gekennzeichnet, dass** die Bestrahlungseinheit (6) mit Hilfe der Manipuliervorrichtung (8) in X-, Y- und Z-Richtung linear bewegbar sowie um eine horizontale und eine vertikale Achse (A, B) schwenkbar ist.

## Claims

1. Method for surface strengthening of blisk blades by means of an apparatus in accordance with Claim 2, **characterized in that** the blisk blade to be treated is inserted into a water bath (13), either completely or at least the blade area to be processed, and that a multitude of high-pressure water jets (10) is injected into the water bath which are directed bilaterally and essentially vertically and/or obliquely - and opposite to each other - to both blade sides to provide cavitation bubbles (11) imploding near the blade surface that are generated in the water bath on the periphery of the high-pressure water jets, with micro jets (12) produced by the implosion exerting an effect on the blade surfaces, where they are leading to plastically formed depressions (14) without sharp edges.

2. Apparatus for the performance of the method for surface strengthening of blisk blades in accordance with Claim 1, with a container (3) providing the water bath (13) for receiving a blisk or blisk drum (1) and a jetting unit (6) of spacedly and parallelly arranged water-jet tubes (4) connected to a high-pressure water conduit (5), with nozzle openings (9) equidistantly disposed in the longitudinal direction of the water-jet tubes (4) to produce high-pressure water jets (10) penetrating the water bath (13) in the direction of the blade surface, with the nozzle openings (9) of the oppositely arranged water-jet tubes (4) being directed towards each other and disposed immediately opposite to one another, and the jetting unit (6) being connected to a manipulator (8) for moving the water-jet tubes (4) at a distance from the blade surface which on both sides is uniform.

3. Apparatus in accordance with Claim 2, **characterized in that** the jetting unit (6) on both sides includes at least one water-jet tube (4) provided with a row of nozzle openings (9) each.

4. Apparatus in accordance with Claim 2, **characterized in that** the water-jet tubes (4) on both sides feature a rectangular cross-section and are provided with at least one row of nozzle openings (9) each.

5. Apparatus in accordance with Claim 2, **characterized in that** the length of the water-jet tubes (4), or a row of nozzle openings (9), covers a part or at least the entire length of the blisk blade (2) to be processed.

6. Apparatus in accordance with Claim 2, **characterized in that** the jetting unit (6) is linearly moveable in X, Y and Z-directions and swivellable about a horizontal and a vertical axis (A, B) by means of the manipulator (8).

## Revendications

1. Procédé pour consolider la surface d'aubes BLISK au moyen d'un dispositif selon la revendication n° 2, **caractérisé en ce que** l'aube BLISK à traiter est dans son intégralité, ou du moins sa partie à ouvrer, plongée dans un bain d'eau (13), et que dans le bain d'eau est injectée de deux côtés une pluralité de jets d'eau sous haute pression (10), respectivement opposés et dirigés sur les deux faces de l'aube pour l'essentiel perpendiculairement et/ou en biais par rapport auxdites faces, afin de former des bulles de cavitation (11) qui sont générées dans le bain d'eau sur le pourtour des jets d'eau sous haute pression et implosent à proximité des surfaces de l'aube, sachant que les microjets (12) créés lors de l'implosion agissent sur les surfaces de l'aube et y produisent par déformation plastique des creux (14) aux bords non vifs.

2. Dispositif pour réaliser le procédé de consolidation de la surface d'aubes BLISK selon la revendication n° 1, comprenant un récipient (3) formant le bain d'eau (13) pour recevoir un disque BLISK ou un tambour BLISK (1), ainsi qu'une unité d'injection (6) constituée de tubes émetteurs de jets d'eau (4) distants les uns des autres et parallèles, raccordés à une conduite d'eau sous haute pression (5), avec des buses (9) équidistantes s'étendant dans le sens longitudinal des tubes émetteurs de jets d'eau (4) et destinées à produire des jets d'eau sous haute pression (10) traversant le bain d'eau (13) en direction des surfaces des aubes, sachant que les buses (9) respectives des tubes émetteurs de jets d'eau (4) opposés sont dirigées les unes sur les autres et se font directement face, et que l'unité d'injection (6) est reliée à un dispositif manipulateur (8) destiné à déplacer les tubes émetteurs de jets d'eau (4) à une distance égale des deux côtés des surfaces des aubes.

3. Dispositif selon la revendication n° 2, **caractérisé en ce que** l'unité d'injection (6) comprend des deux côtés au moins un tube émetteur de jets d'eau (4) avec chacun une rangée de buses (9).

4. Dispositif selon la revendication n° 2, **caractérisé en ce que** les tubes émetteurs de jets d'eau (4) des deux côtés ont une coupe transversale rectangulaire et présentent chacun au moins une rangée de buses (9).

5. Dispositif selon la revendication n° 2, **caractérisé en ce que** la longueur des tubes émetteurs de jets d'eau (4) ou d'une rangée de buses (9) couvre une partie ou au moins la longueur intégrale de l'aube BLISK (2) à traiter.

6. Dispositif selon la revendication n° 2, **caractérisé en ce qu'**à l'aide du dispositif manipulateur (8), l'unité d'injection (6) peut être mise en mouvement linéaire dans les directions X, Y et Z et peut pivoter autour d'un axe horizontal et d'un axe vertical (A, B).
